(19) Europäisches Patentamt
European Patent Office
Office européen des brevets

(11) **EP 2 492 826 A1**

(12) **EUROPEAN PATENT APPLICATION**

(43) Date of publication:
    **29.08.2012 Bulletin 2012/35**

(51) Int Cl.:
    **G06F 17/30** (2006.01)    **G06K 9/62** (2006.01)

(21) Application number: **12153718.7**

(22) Date of filing: **02.02.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **28.02.2011 JP 2011041268**<br><br>(71) Applicant: **Hitachi Ltd.**<br>**Tokyo 100-8280 (JP)** | (72) Inventors:<br>• **Murakami, Takao**<br>  **Chiyoda-ku,, Tokyo 100-8220, (JP)**<br>• **Takahashi, Kenta**<br>  **Chiyoda-ku,, Tokyo 100-8220, (JP)**<br><br>(74) Representative: **Calderbank, Thomas Roger et al**<br>**Mewburn Ellis LLP**<br>**33 Gutter Lane**<br>**London EC2V 8AS (GB)** |

(54) **High-accuracy similarity search system**

(57)    A pivot is determined from enrolled data by a pivot determination unit, raw data is acquired, features are extracted from the raw data, a score is calculated as one of a distance and a degree of similarity between the features, an index vector is generated by using the score for the pivot, a $\Delta$ score is calculated as one of a distance and a degree of similarity between the index vectors, a parameter of each non-pivot including a regression coefficient is trained by using training data, order to select the non-pivots is, by using the $\Delta$ score between search data and the non-pivot as well as the regression coefficient, determined in descending order of posterior probability through logistic regression, and a search result is outputted based on the score between the search data and the enrolled data.

FIG. 6

EP 2 492 826 A1

**Description**

The present invent relates to a method and a system for searching similarity in inputted unstructured data.

Searching, compared to inputted unstructured data such as an image, a moving picture, a document, binary data, or biological body information, unstructured data similar thereto is called similarity search. The similarity search is typically performed by extracting from raw unstructured data (hereinafter called raw data) information called features used for distance calculation (or similarity calculation) and then considering that a smaller distance indicating a degree of disagreement between the features (or a greater degree of similarity indicating a degree of agreement between the features) indicates a greater degree of similarity. The distance (degree of similarity) between the features is called score.

Examples include: a method (k-Nearest Neighbor Search) of calculating a distance (or degree of similarity) between raw data inputted at time of search (hereinafter called search data) and raw data enrolled in a database (hereinafter called enrolled data), selecting K pieces of the enrolled data in ascending order of distance (or descending order of the degree of similarity), and outputting information related thereto as search results; and a method (Range Search) of outputting as search results information related to the enrolled data whose distance (or degree of similarity) is smaller (or larger) than a threshold value r.

At this point, calculating scores for all the pieces of enrolled data where a total number of enrolled data is N requires N times of score calculation. Typically, the score calculation requires a significant amount of time; therefore, an increase in the number N of pieces of enrolled data results in an almost proportional increase in the amount of search time. On the contrary, suggested is distance-based indexing by which scores between the pieces of enrolled data are previously calculated, the order to select the pieces of enrolled data for which the score is to be calculated by using this is determined, and the calculation of the scores from the pieces of enrolled data is stopped in the middle of processing to thereby reduce the number of times of score calculation.

For example, in E. CHAVEZ, K. FIGUEROA and G. NAVARRO", "Effective Proximity Retrieval by Ordering Permutations," IEEE Trans. on Pattern Analysis and Machine Intelligence, Vol. 30, No. 9, pp. 1647-1658 (2008), from N pieces of enrolled data, for example, M (M<N) pieces of enrolled data (hereinafter called pivots) are selected randomly, a distance between each piece of enrolled data and each pivot is calculated, a vector (hereinafter called first index vector) used at time of search by using this distance is obtained for each piece of enrolled data, a distance between search data inputted at the time of search and each pivot is calculated to obtain a second index vector of the search data, and then the order to select the remaining pieces of enrolled data (hereinafter called non-pivots) are determined in ascending order of a distance between the first and second index vectors). As the index vector, obtained in E. CHAVEZ, K. FIGUEROA and G. NAVARRO, "Effective Proximity Retrieval by Ordering Permutations," IEEE Trans. On Pattern Analysis and Machine Intelligence, Vol. 30, No. 9, pp. 1647-1658 (2008) is a vector with which IDs of the pivots are arranged in ascending order of distance.

In Non Patent Literature 1, the order to select the non-pivots is determined in the ascending order of the distance between the first and second index vectors. However, this method leaves room for improvement in that an expected number of non-pivots for which score calculation is not performed (for which a score is not searched) is reduced, despite that the score from the search data is smaller than the threshold value r, when the calculation of the score from the non-pivot is stopped in the middle of processing, that is, in terms of search accuracy.

It is a preferred aim of the present invention to theoretically minimize an expected number of non-pivots for which the score is not calculated and thus not searched.

The present invention is characterized by having: a pivot determination unit that determines a pivot from enrolled data; a raw data acquisition unit that acquires raw data; a feature extraction unit that extracts features from the raw data; a score calculation unit that calculates a score as one of a distance and a degree of similarity between the features; an index vector generation unit that generates an index vector by using the score for the pivot; a Δ score calculation unit that calculates a Δ score as one of a distance and a degree of similarity between the index vectors; an non-pivot-specific parameter training unit that trains, by using training data, a parameter of each non-pivot including a regression coefficient; a non-pivot selection order determination unit that determines, by using the Δ score between inputted search data and the non-pivot as well as the regression coefficient, in order to select the non-pivots in descending order of posterior probability through logistic regression; a search result output unit that outputs a search result based on the score between the search data and the enrolled data; and a database that holds the feature of the enrolled data, pivot information indicating which piece of the enrolled data is the pivot, an index including the index vector of each non-pivot, and the parameter of each non-pivot.

With the present invention, by using a non-pivot-specific regression coefficient, the order to select the non-pivots is determined in descending order of posterior probability through logistic regression. This makes it possible to theoretically minimize the expected number of non-pivots for which the score is not calculated and thus not searched, despite that the score from the search data is smaller than the threshold value r. This consequently provides effect of dramatically improving accuracy.

In the drawings:

FIG. 1 is a block diagram showing functional configuration according to a first embodiment of the present invention;
FIG. 2 is a block diagram showing hardware configuration according to the first embodiment and a second embodiment of the invention;
FIG. 3 is a flow diagram showing enrollment processing according to the first embodiment of the invention;
FIG. 4 is a flow diagram showing supplementary information generation processing according to the first and second embodiments of the invention;
FIG. 5 is a flow diagram showing search processing according to the first embodiment of the invention;
FIG. 6 is a schematic diagram showing a feature space and indexes;
FIG. 7 is a block diagram showing functional configuration according to the second embodiment of the invention;
FIG. 8 is a flow diagram showing enrollment processing according to the second embodiment of the invention; and
FIG. 9 is a flow diagram showing search processing according to the second embodiment of the invention.

[First Embodiment]

Hereinafter, the first embodiment will be described with reference to the accompanying drawings.

A similarity search system of this embodiment is a similar image search system that, as a result of inputting an image by the user, searches a database in a server terminal for a similar image. Unstructured data such as a moving picture, music, a document, or binary data instead of an image may be used. The similarity search system of this embodiment uses a color histogram as features of the image and uses a Euclid distance as a score between the features.

The similarity search system of this embodiment preselects M pivots from N pieces of enrolled data. As a method of selecting the pivots, there is, for example, a method of selecting them randomly. Next, the similarity search system calculates a score between each piece of the remaining enrolled data (each non-pivot) and each of the pivots and, based on this, obtains a first index vector used at time of search for each non-pivot. At time of search, the similarity search system calculates a score between the inputted search data and each pivot and, based on this, obtains a second index vector of the search data. The index vector is a vector as a clue directly teaching positional relationship between each non-pivot and the search data without obtaining a score. Typically, it takes a great deal of time for calculating the score between the search data and each piece of the enrolled data, but the number of times of score calculation can be reduced (that is, high-speed search can be performed) by determining the order to select non-pivots by using a distance (or a degree of similarity) between the index vectors (hereinafter called Δ score), performing calculation of the score from the non-pivot T(<N-M) times (where T is an upper limit value predefined by the system manager or the like), and then stopping the calculation of the score from the non-pivot in the middle of performance.

As the index vector, a vector formed of the score from each pivot (hereinafter called score vector) may be provided or a vector (hereinafter referred to as permutation vector) with IDs of the pivots arranged in ascending order of distance (or degree of similarity) may be provided. A collection of the first index vectors of the different non-pivots is called an index.

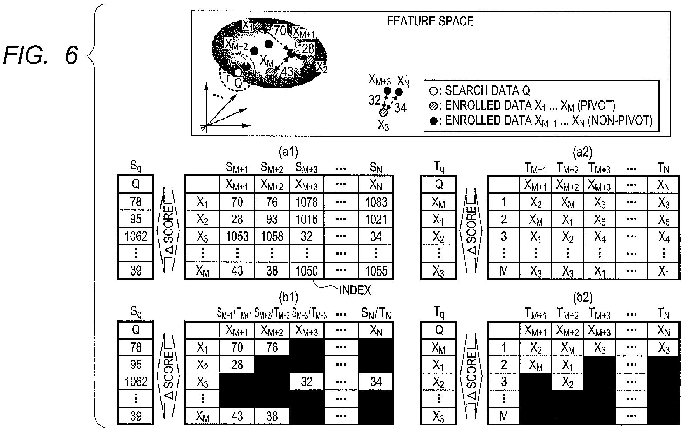

FIG. 6 shows an example of search data Q and enrolled data $X_1$, $X_2$, ...$X_N$ in a feature space. Note that $X_1$, $X_2$, ...$X_M$ denote pivots and $X_{M+1}$, $X_{M+2}$, ...$X_N$ denote non-pivots. Here, two clusters are formed and they are greatly separated from each other. Moreover, the number of dimensions of the feature is very large and it takes time to calculate a score between the features.

FIGS. 6 (a1) and (a2) show examples of the second index vector of the search data and indexes when a score vector and a permutation vector are respectively used as the index vector. Note that the Euclid distance between the features is used as a score.

For example, in FIG. 6 (a1), the score between $X_M$+1 and $X_1$ is 70 and the score vector $S_{M+1}$ of $X_{M+1}$ is $S_{M+1}$= $(70, 28, 1053, ..., 43)^T$. In FIG. 6 (a2), the pivot realizing the smallest score of the scores between $X_{M+1}$ and the pivots is $X_2$ and the score of $X_{M+1}$ is $T_{M+1}$= $(X_2, X_{M-1}, ..., X_3)^T$.

For the Δ score (distance or degree of similarity between the index vectors), when the score vector is used as the index vector, for example, any of Manhattan distance, the Euclid distance, etc. is assumed, and when the permutation vector is used, for example, any of Spearman Rho, etc. is assumed. Alternatively, for example, what is obtained by subtracting the aforementioned distance from a maximum possible value may be used as the degree of similarity.

For example, when the score vector is used as the index vector and the Euclid distance is used as the Δ score, where a Euclid distance between a score vector $S_q$ of the search data and a score vector $S_i$ of enrolled data $X_i$ is $D_e(S_q, S_i)$,

[Formula 1]

$$D_e(S_q, S_i) = \sum_{z=1}^{M} (S_q(z) - S_i(z))^2$$

is obtained. Here, $S_i(z)$ denotes a z-th element in the score vector $S_i$. In the case of FIG. 6(a1), obtained calculation can be $D_e(S_q, S_{M+1})=(78-70)^2+(95-28)^2+_{...}+(39-43)^2$.

When the permutation vector is used as the index vector and Spearman Rho is used as the $\Delta$ score, where Spearman Rho between a permutation vector $T_q$ of the search data and a permutation vector $T_i$ of the enrolled data $X_i$ is $D_\rho (T_q, T_i)$,

[Formula 2]

$$D_\rho( T_q, \ T_i) = \sum_{z=1}^{M} ( z - T_q^{-1}( T_i( z ) ) )^2$$

is obtained. Here, $T_i(z)$ denotes a suffix number of the z-th element in the permutation vector $T_i$. For example, where $T_i=(X_2, X_M, X_1, ..., X_3)^T$, $T_i(1)=2$, $T_i(2)=M$, $T_i(3)=1$, ..., $T_i (M) =3$. $T_q^{-1}(i)$ denotes at what place in the permutation vector $T_q$ the element $X_i$ is located. For example, where $T_q= (X_M X_1, X_2, ..., X_3)^T$, $T_q^{-1}(1)=2$, $T_q^{-1}(2)=3$, $T_q^{-1}(3)=M$, ..., $T_q^{-1}(M) =1$. In FIG. 6(a2), obtained calculation can be $Dp(Tq, T_{M+1})=(1-3)^2+(2-1)^2+...+(M-M)^2$.

A first characteristic of the similarity search system of this embodiment is that an index vector size (the number of dimensions of the index vector) of each non-pivot is uniquely determined (trained) before search by using prepared data (training data). A method of training the index vector size will be described in detail below.

FIGS. 6(b1) and (b2) show examples of the indexes when index vectors are held in correspondence with the index vector size of each trained non-pivot in a case where the score vector and the permutation vector are used as the index vectors. In this case, when the score vector is used as the index vector, for the score vector, rearrangement is made so that the number of elements corresponding to a score vector size are provided in ascending or descending order of scores, and in order to tell to which pivot the concerned score corresponds, a permutation vector with the same length is also held.

For example, in FIG. 6(b1), the score vector size of $X_{M+1}$ is trained as 3, and the score vector $S_{M+1}=(28, 43, 70)$ is held together with the permutation vector $T_{M+1}= (X_2, X_M, M_1)^T$. In FIG. 6(b2), a permutation vector size is trained as 2, and a permutation vector $T_{M+1}$ is $T_{M+1} = (X_2, X_M)^T$. In FIGS. 6(b1) and (b2), blacked-out sections are saved into the database.

As described above, in this embodiment, by using the training data, the non-pivot-specific index vector size is trained, and the non-pivot-specific index vector is saved in correspondence with the index vector size of this non-pivot. This makes it possible to reduce the index vector size for each non-pivot. This results in reduction in a size of indexes saved into the database, which can provide effect of realizing system weight reduction. Details of a method of training the index vector size will be described below.

The $\Delta$ score in this case is indicated, when the score vector is used as the index vector and the Euclid distance is used as the $\Delta$ score, where the Euclid distance between a score vector $S_q$ of the search data and a score vector $S_i$ of the enrolled data $X_i$ (permutation vector is $T_i$ and the score vector size is $Z_i$) is $D_e (S_q, S_i, T_i, Z_i)$ :

[Formula 3]

$$D_e( S_q, \ S_i, \ T_i, \ Z_i) = \sum_{z=1}^{Z_i} ( S_q( T_i( z ) ) - S_i( T_i( z ) ) )^2$$

In the case of FIG. 6(b1), obtained calculation can be $D_e(S_q, S_{M+1}, T_i, Z_i)=(95-28)^2+(39-43)^2+...+(78-70)^2$.

Moreover, when the permutation vector is used as the index vector and the Spearman Rho is used as the $\Delta$ score, where Spearman Rho between the permutation vector $T_q$ of the search data and the permutation vector $T_i$ of the enrolled data $X_i$ (permutation vector size is $Z_i$) is $D_\rho (T_q, T_i, Z_i)$,

[Formula 4]

$$D_\rho(T_q, T_i, Z_i) = \sum_{z=1}^{Z_i} (z - T_q^{-1}(T_i(z)))^2$$

is obtained. In the case of FIG. 6(a2), obtained calculation can be $D_\rho(T_q, T_{M+1}, Z_i) = (1\text{-}3)^2 + (2\text{-}1)^2$.

As described above, the $\Delta$ score, corresponding to the index vector size, between the search data and the non-pivot (that is, distance between $z_i$-dimension vectors) is calculated. This requires shorter time for the $\Delta$ score calculation than for calculating a $\Delta$ score corresponding to the number (M) of pivots (that is, distance between M-dimension vectors). This consequently provides effect of improving speed.

A second characteristic of the similarity search system of this embodiment is that after the $\Delta S_{q, M+1}, ..., \Delta S_{q, N}$ for each non-pivot is obtained in this manner, by using logistic regression, the order to select non-pivots is determined in descending order of posterior probability P (sq, i<r|$\Delta S_{q, i}$) (M+1$\leq$i$\leq$N) for which the score $s_{q, i}$ from the search data is smaller than a threshold value r. The posterior probability P (sq, i<r|$\Delta S_{q, i}$) can be deformed by use of Bayes' theorem as follows:

[Formula 5]

$$P(s_{q, i} < r \mid \Delta S_{q, i})$$
$$= \frac{P(\Delta S_{q, i} \mid s_{q, i} < r) \, P(s_{q, i} < r)}{P(\Delta S_{q, i})}$$
$$= \frac{1}{1 + exp(-a_i)}$$
$$= \sigma(-a_i)$$

where $\sigma$ ( ) is a logistic sigmoid function, and $a_i$ is:

[Formula 6]

$$a_i = \ln \frac{P(\Delta S_{q, i} \mid s_{q, i} < r) \, P(s_{q, i} < r)}{P(\Delta S_{q, i}) - P(\Delta S_{q, i} \mid s_{q, i} < r) \, P(s_{q, i} < r)}$$

A logistic sigmoid function $\sigma$ ( ) is a monotonically increasing function, and thus determining the order to select the non-pivots in descending order of $a_i$ permits determination of the order to select the non-pivots in descending order of the posterior probability P (sq, I<r|$\Delta S_{q, i}$) . The $a_i$ can be obtained by using the logistic regression. In the logistic regression, $a_i$ can be obtained in an approximate manner by:

[Formula 7]

$$a_i = w_{i, 1} \Delta S_{q, i} + w_{i, 0}$$

The $w_{i, 1}$ and $w_{i, 0}$ are non-pivot-specific regression coefficients of logistic regression (M+1$\leq$i$\leq$n). It is possible to adopt a method of using a value common to the non-pivots as the regression coefficient, but since the regression coefficient definitely differs in value from one non-pivot to another, it is possible to more properly obtain the $a_i$ by using the non-pivot-specific regression coefficient. Moreover, according to Formula 7, $a_i$ can be obtained in an approximate manner through performing multiplication once and performing addition once on the $\Delta$ score $\Delta S_{q, i}$, and thus it takes little time for calculating the $a_i$. The regression coefficient is uniquely determined (trained) before search by using prepared data (training data), as is the case with the index vector size. Details of a method of training the regression coefficient will be described below.

Assuming here that an aggregation of $\Delta$ scores $\Delta S_{q, M+1}, ..., \Delta S_{q, N}$ for each non-pivot is $\Delta S_q$ and then the non-pivot determined as the $e(1 \leq e \leq N-M)$-th place is $X_{m(e)}$ $(M+1 \leq m(e) \leq N)$, an expected number of non-pivots for which the score is consequently not calculated (that is, not searched) despite that the score from the search data is smaller than the threshold value r after calculating the score from the non-pivot $T(<N-M)$ times can be denoted as:

[Formula 8]

$$\sum_{e=T+1}^{N-M} 1 \times P\ (s_{q, m(e)} < r \mid \Delta S_q) + 0 \times P\ (s_{q, m(e)} \geq r \mid \Delta S_q)$$

$$= \sum_{e=T+1}^{N-M} P\ (s_{q, m(e)} < r \mid \Delta S_q)$$

$$\fallingdotseq \sum_{e=T+1}^{N-M} P\ (s_{q, m(e)} < r \mid \Delta S_{q, m(e)})$$

Note, however, that for the approximation from the second to third lines, what has the greatest influence on the posterior probability of the non-pivot $X_{m(e)}$ is a $\Delta$ score $\Delta S_{q,m(e)}$ for $X_{m(e)}$. In Formula 8, approximation can be achieved by a sum of posterior probabilities $P\ (s_q, m(e) < r \mid \Delta S_{q, m(e)})$ of the non-pivot $X_{m(e)}$ for which score calculation has not yet been performed, but this sum can be minimized when the score from the non-pivot is calculated T-times in descending order of the posterior probability $P\ (s_q, m\ (e) < r \mid \Delta S_{q, m(e)})$.

Therefore, in this embodiment, the order to select the non-pivots is determined in descending order of the posterior probability through the logistic regression by using the non-pivot-specific regression coefficient, and this makes it possible to theoretically minimize the expected number of non-pivots for which the score is not calculated and thus not searched despite that the score from the search data is smaller than the threshold value r. This consequently provides effect of dramatically improving accuracy. Details of a method of training the regression coefficient will be described below.

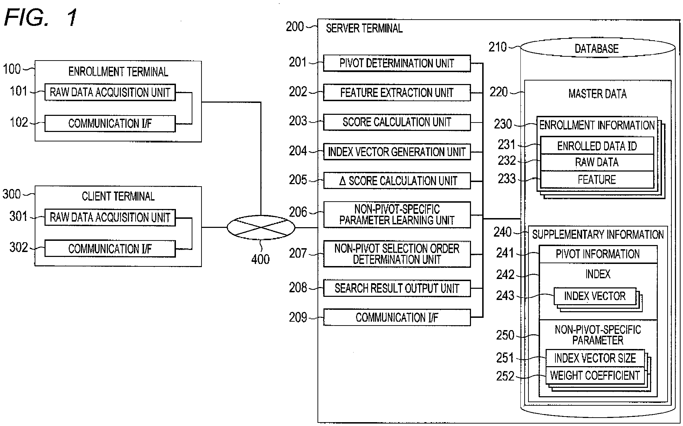

FIG. 1 shows a configuration example of the similarity search system of this embodiment. In this embodiment, raw data is an image.

This system is composed of: an enrollment terminal 100 that transmits to a server terminal enrollment information acquired from a user; a server terminal 200 that saves the enrollment information, generates supplementary information from the enrollment information, and performs similarity search on raw search data by using the enrollment information and the supplementary information; a client terminal 300 that transmits to the server terminal 200 the raw search data inputted by the user; and a network 400.

The number of each of the enrollment terminal 100, the server terminal 200, and the client terminal 300 may be one or more. The enrollment terminal 100 may be the same terminal as the server terminal 200 or as the client terminal 300. Moreover, the enrollment terminal 100 is not necessarily provided. The server terminal 200 may be the same terminal as the client terminal 300. The network 400 may use a network such as WAN or LAN, communication between devices using a USB, an IEEE 1394, or the like, or wireless communication such as a portable phone network or BlueTooth.

For example, assumed configuration is that the enrollment terminal 100 includes a plurality of PCs in a firm, the server terminal 200 is one server in a data center operated by the firm, the client terminal 300 includes a plurality of users' individual PCs, and the network 400 is the Internet, and assumed operation is that an employee in the firm performs image enrollment. In this case, the enrollment terminal 100 may be a server in the data center, so that a server manager can perform image enrollment. Alternatively, the enrollment terminal 100 may be provided in the user's individual PC, so that the user can perform image enrollment. Alternatively, without providing the enrollment terminal 100, the server terminal 200 may perform automatic collection from the Internet. Alternatively, the enrollment terminal 100, the server terminal 200, and the client terminal 300 may be provided in the user's individual PC, so that image enrollment, supplementary information generation, and search can be performed on the individual PC.

The enrollment terminal 100 is composed of: a raw data acquisition unit 101 that acquires raw data; and a communication I/F 102.

The server terminal 200 is composed of: a pivot determination unit 201 that determines M pivots from N pieces of enrolled data; a feature extraction unit 202 that extracts features from raw data; a score calculation unit 203 that calculates a score as a distance (or a degree of similarity) between the features; an index vector generation unit 204 that generates an index vector by using a score for a non-pivot or a pivot of search data; a $\Delta$ score calculation unit 205 that calculates a distance (or degree of similarity) (hereinafter called $\Delta$ score) between the index vectors; a non-pivot-specific parameter training unit 206 that trains a non-pivot-specific parameter by using training data; a non-pivot selection order determination unit 207 that determines the order to select the non-pivots by using a $\Delta$ score between the inputted search data and the non-pivot; a search result output unit 208 that outputs search results based on a score between the search data and the enrolled data; a communication I/F 209, and a database 210.

The database 210 holds master data 220. The master data 220 holds enrollment information 230 of each enrolled user and supplementary information 240. The enrollment information 230 holds, for each piece of the enrolled data, an enrolled data ID 231, raw data 232, and a feature 233. The supplementary information 240 holds: pivot information 241 that indicates which piece of the enrolled data is a pivot; an index 242; and a non-pivot-specific parameter 250. The index 242 holds an index vector 243 for each non-pivot. The non-pivot-specific parameter 250 holds, for each non-pivot, an index vector size 251 and a regression coefficient 252 that is used for logistic regression.

The client terminal 300 is composed of: a raw data acquisition unit 301 that acquires raw data; and a communication I/F 302.

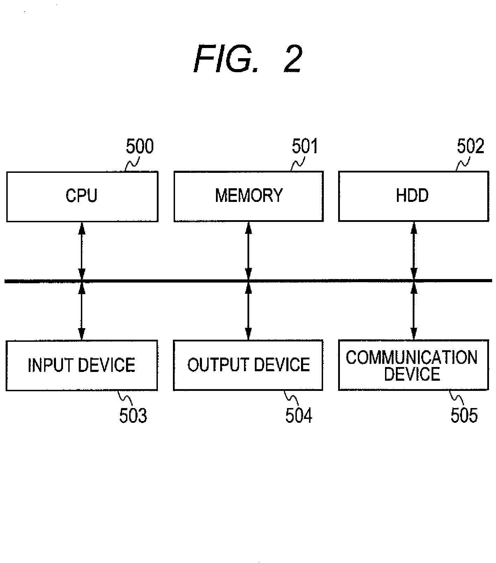

FIG. 2 shows hardware configuration of the enrollment terminal 100, the server terminal 200, and the client terminal 300 according to this embodiment. These terminals can be composed of: as shown in the figure, a CPU 500, a memory 501, an HDD 502, an input dev ice 503, an output device 504, and a communication device 505.

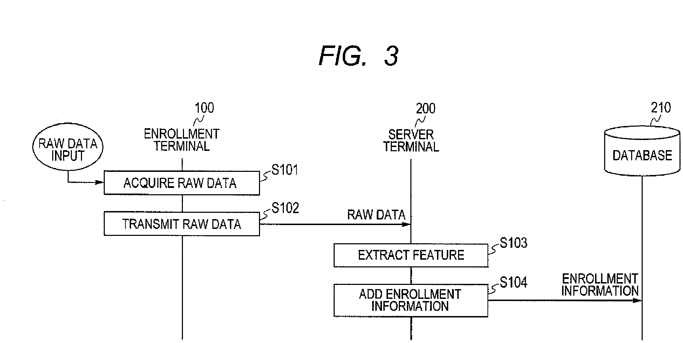

FIG. 3 shows processing procedures and a data flow of enrollment according to this embodiment.

The enrollment terminal 100 acquires raw enrolled data from the user (step S101).

The enrollment terminal 100 transmits the raw enrolled data to the server terminal 200 (step S102).

The server terminal 200 extracts features for enrollment from the raw enrolled data (step S103).

The server terminal 200 saves into the database 210 the enrollment information 230 including the enrolled data ID 231 specific to the enrolled data, the raw data 232 for enrollment, and the feature 233 for enrollment (step S104).

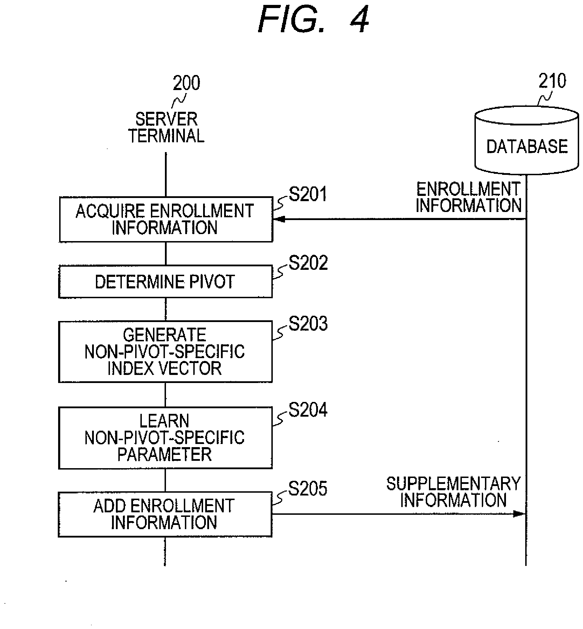

FIG. 4 shows processing procedures and a data flow of supplementary information generation according to this embodiment. This processing is performed between when enrollment processing is performed and when search processing is performed. For example, it is possible to perform this processing immediately after the enrollment or at night on a day when the enrollment is performed. Moreover, this processing involves two cases: the case where supplementary information is newly generated; and the case where the supplementary information for enrolled data added after the last supplementary information generation is updated.

The server terminal 200 acquires the enrollment information 230 of each enrolled user from the database 210 to newly generate supplementary information and acquires the added enrollment information 230 from the database 210 to updates the supplementary information (step S201).

To newly generate supplementary information, the server terminal 200 newly determines M pivots from among the raw data 232 of the N pieces of enrollment information 230 (step S202). To update the supplementary information, this step is omitted and the raw data 232 of the added enrollment information 230 is provided as a non-pivot. Methods of determining a pivot include: for example, random selection; and determining as a pivot upon every pivot selection the one which has a smallest (or largest) sum of scores or $\Delta$ scores from the pivots determined by that time.

The server terminal 200 obtains a score between each pivot and each of the (N-M) non-pivots to generate the index vector 243 to newly generate supplementary information, and obtains a score between each pivot and each of the added non-pivots to generate the index vector 243 to update the supplementary information (step S203).

The server terminal 200 uniquely determines (trains) the non-pivot-specific parameter 250 composed of the index vector size 251 and the regression coefficient 252 used for the logistic regression by using prepared data (training data) for each of the N-M non-pivots to newly generate supplementary information and for each added non-pivot to update the supplementary information (step S204). Details of a method of training the non-pivot-specific parameter 250 composed of the index vector size 251 and the regression coefficient 252 will be described below.

The server terminal 200, to newly generate supplementary information, saves into the database 210, as the supplementary information 240, the pivot information 241 indicating which piece of the enrolled data is a pivot, the index 242 composed of the index vector 243 of each of the N-M non pivots, and the non-pivot-specific parameter 250 composed of the index vector size 251 and the regression coefficient 252 of each trained non-pivot. The server terminal 200, to update the supplementary information, adds the generated index vector 243 to the index 242 of the database 210, and adds the index vector size 251 and the regression coefficient 252 of each trained non-pivot to the non-pivot-specific parameter 250. At this point, for the index vector 243 of each non-pivot, saving or addition for the index vector size 251 of the concerned non-pivot is performed (step S205).

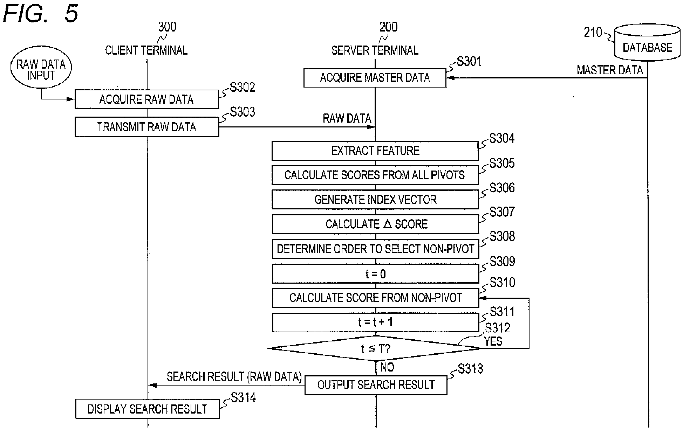

FIG. 5 shows processing procedures and a data flow of search according to this embodiment.

The server terminal 200 acquires the master data 220 from the database 210 (step 5301).

The client terminal 300 acquires raw search data from the user (step S302).

The client terminal 300 transmits the raw search data to the server terminal 200 (step S303).

The server terminal 200 extracts a feature for search from the raw search data (step S304).

The server terminal 200 calculates a score between the search data and each pivot (step S305).

The server terminal 200, based on the score between the search data and each pivot, generates an index vector of the search data (step S306).

The server terminal 200, by using the index vector of the search data, the index 242 including the index vector of each non-pivot, and the index vector size 251 of each non-pivot, calculates a $\Delta$ score between the search data and each of the non-pivots (step S307).

The server terminal 200, based on a $\Delta$ score $\Delta S_{q,\ M+1}, ..., \Delta S_{q,\ N}$, by using regression coefficients $w_{i,\ 1}$ and $w_{i,\ 0}$ of logistic regression of each non-pivot, obtains by Formula 7 a value $a_i$ related in a monotonically increasing manner to posterior probability $P(sq, i<r|\Delta Sq, i)(M+1 \leq i \leq N)$ for which the score $S_{q,\ i}$ from the search data is smaller than the threshold value r, and determines the order to select the non-pivots in descending order of $a_i$ (step S308).

The server terminal 200 initializes at 0 the number of times t of calculating the score between the search data and the non-pivot (step S309).

The server terminal 200 calculates a score between the search data and the non-pivot selected in accordance with the order to select the non-pivots determined at step S308 (step S310).

The server terminal 200 increases the number of times t of calculating the score between the search data and the non-pivot by an increment of 1 (step S311).

The server terminal 200 proceeds to step S310 if the number of times t of calculating the score between the search data and the non-pivot is equal to or smaller than an upper limit value T and proceeds to step S313 if it is larger than the upper limit value T (step S312).

The server terminal 200 transmits the raw data 232 as search results to the client terminal 300 (step S313). At this point, a method of selecting k pieces of enrolled data in ascending order (or descending order) of score and providing them as search results (k-Nearest Neighbor Search) may be adopted, or a method of providing as search results the enrolled data for which the score is smaller (or larger) than the threshold value r (Range Search) may be adopted.

The client terminal 300 displays the raw data 232 as the search results (step S314).

Hereinafter, details of the method of training by using the training data the parameter 250 composed of the index vector size 251 and the regression coefficient 252 for each non-pivot in step S204 will be described. As the training data, (N-1) non-pivots other than the concerned non-pivot for which the parameter is trained may be used, or data previously prepared separately from the enrolled data may be used.

First, the method of training the regression coefficients $w_{i,\ 1}$ and $w_{i,\ 0}$ when an index vector size $Z_i$ is fixed at a certain value will be described. Assume that the training data are $Q_1, Q_2, ...Q_{N'}$ (where N' is the number of pieces of training data). Moreover, a $\Delta$ score between the training data Qj (1≤j≤N') and the non-pivot $X_i$

(M+1≤i≤N) is a $\Delta S_{j,\ i}$, and an aggregation of $\Delta$ scores for the non-pivot $X_i$ of each training data Qj (1≤j≤N') is expressed by:

[Formula 9]

$$\Delta S_i = \{ \Delta S_{j,\ i} \mid 1 \leq j \leq N' \}$$

For example, when the score vector is used as the index vector and the Euclid distance is used as the $\Delta$ score, the $\Delta S_{j,\ i}$ can be expressed as $D_e (S_{qj}, Si, Ti, Z_i)$ (where $S_{qj}$ is a score vector of the training data Qj) and can be calculated by Formula 3. When the permutation vector is used as the index vector and the Spearman Rho is used as the $\Delta$ score, the $\Delta S_{j,\ i}$ is $D_\rho \langle T_{qj}, Ti, Zi \rangle$ (where $T_{qj}$ is a permutation vector of the training data $Q_j$) and can be calculated by Formula 4.

Further, assume that a label that takes 1 when a score $S_{j,\ i}$ between the training data Qj (1≤j≤N') and the non-pivot Xi (M+1≤i≤N) is smaller than the threshold value r and that takes 0 in other cases is defined as $L_{ji}$ and an aggregation of labels for the non-pivot Xi of each training data Qj (1≤j≤N') is expressed by:

[Formula 10]

$$L_i = \{ L_{ji} \mid 1 \leq j \leq N' \}$$

Furthermore, a regression coefficient of the non-pivot $X_i$ can be expressed, where $w_{i,1}$ and $w_{i,0}$ are arranged, in a vector form of:

[Formula 11]

$$w_i = (w_{i,1}, \ w_{i,0})^T$$

In this embodiment, the aggregation $\Delta S_i$ of the $\Delta$ scores for the non-pivot $X_i$ and the aggregation $L_i$ of the labels are used for training the regression coefficient $w_i$.

As the method of training the regression coefficient, there is a method of using maximum A posterior probability estimation and maximum likelihood estimation. To train the regression coefficient $w_i$ through the maximum A posterior probability estimation by using the aggregation $\Delta S_i$ of the $\Delta$ scores for the non-pivot $X_i$ and the aggregation $L_i$ of the labels, a parameter $w_i^{MAP}$ is obtained through:

[Formula 12]

$$w_i^{MAP}$$
$$= \arg\max_{w_i} P(w_i | \Delta S_i, \ L_i)$$
$$= \arg\max_{w_i} P(\Delta S_i, \ L_i | w_i) \ P(w_i)$$
$$= \arg\max_{w_i} P(L_i | \Delta S_i, \ w_i) \ P(\Delta S_i | w_i) \ P(w_i)$$
$$= \arg\max_{w_i} P(L_i | \Delta S_i, \ w_i) \ P(\Delta S_i) \ P(w_i)$$
$$= \arg\max_{w_i} P(L_i | \Delta S_i, \ w_i) \ P(w_i)$$

and they are provided as training results. However, Bayes' theorem is used for deformation on the 2nd to 4th lines and the $\Delta S_i$ and $w_i$ are independent from each other for deformation on the 4th to 5th lines (that is, $P(\Delta S_i | w_i) = P(\Delta S_i)$). For deformation on the 5th to 6th deformation, the fact that $P(\Delta S_i)$ is fixed, not depending on $w_i$ is used. Moreover, argmax $f(x)$ indicates $x$ that maximizes $f(x)$. To train the regression coefficient $w_i$ through the maximum likelihood estimation, a parameter $w_i^{ML}$ is obtained through:

[Formula 13]

$$w_i^{ML}$$
$$= \arg\max_{w_i} P(\Delta S_i, \ L_i | w_i)$$
$$= \arg\max_{w_i} P(L_i | \Delta S_i, \ w_i) \ P(\Delta S_i | w_i)$$
$$= \arg\max_{w_i} P(L_i | \Delta S_i, \ w_i) \ P(\Delta S_i)$$
$$= \arg\max_{w_i} P(L_i | \Delta S_i, \ w_i)$$

and they are provided as training results.

As shown by Formulae 12 and 13, the maximum A posterior probability estimation is different from the maximum likelihood estimation in a point that the regression coefficient is trained in view of the posterior probability $P(w_i)$ of the regression coefficient $w_i$. As described above, the maximum A posterior probability estimation is characterized by being capable of training the regression coefficient more toughly than the maximum likelihood estimation, by considering the posterior probability of the regression coefficient, even when the number of pieces of training data is small. In particular, in this embodiment, the number of labels $L_{ji}$ taking 1 (that is, the number of pieces of the training data $Q_j$ similar to the non-pivot $X_i$) is typically very small, and thus the regression coefficient may not be appropriately trained through the maximum likelihood estimation. Even in such a case, the regression coefficient can be appropriately trained through the maximum A posterior probability estimation.

$P(Li|\Delta S_i, w_i)$ can be obtained by:

[Formula 14]

$$P(L_{ji}|\Delta S_i, w_i)$$
$$= \prod_{j=1}^{N'} P(s_{j,i} < r | \Delta S_{j,i}, w_i)^{L_{ji}} P(s_{j,i} \geq r | \Delta S_{j,i}, w_i)^{1-L_{ji}}$$
$$= \prod_{j=1}^{N'} P(s_{j,i} < r | \Delta S_{j,i}, w_i)^{L_{ji}} (1 - P(s_{j,i} < r | \Delta S_{j,i}, w_i))^{1-L_{ji}}$$
$$= \prod_{j=1}^{N'} \sigma(a_{j,i})^{L_{ji}} (1 - \sigma(a_{j,i}))^{1-L_{ji}}$$

Note that, however, the label $L_{ji}$ for the 1st to 2nd lines takes 1 when the score $s_{j,i}$ between the training data $Q_j$ and the non-pivot $X_i$ is smaller than the threshold value r and takes 0 in other cases and dependence on the $\Delta$ score $\Delta S_{j,i}$ is used. Moreover, $a_{j,i}$ is:

[Formula 15]

$$a_{j,i} = \ln \frac{P(\Delta S_{j,i} | s_{j,i} < r) P(s_{j,i} < r)}{P(\Delta S_{j,i}) - P(\Delta S_{j,i} | s_{j,i} < r) P(s_{j,i} < r)}$$

By using the logistic regression described above,

[Formula 16]

$$a_{j,i} \doteq w_{i,1} \Delta S_{j,i} + w_{i,0}$$

can be obtained.

Assuming that $P(w_i)$ is, for example, normal distribution of an average vector 0 and variance-covariance matrix $\Sigma_0$,

There is a method of obtaining:

[Formula 17]

$$P(w_i) = N(0, \Sigma_0)$$

There are, for example, a method of presetting $\Sigma_0$ at an adequate value and a method of automatically determining it by using empirical Bayes method based on the training data. Moreover, an average vector other than 0 may be used, or for example, exponential distribution or gamma distribution other than normal distribution may be used as a distribution model.

At this point, the regression coefficient $w_i^{MAP}$ or $w_i^{ML}$ obtained through the maximum A posterior probability estimation or the maximum likelihood estimation (that is, which maximizes Formula 16 or 17) can be calculated by using, for example, a Newton-Raplon method. This is a method of sequentially obtaining the value $w_i^{MAP}$ of the maximum A posterior probability estimation or the value $w_i^{ML}$ of the maximum likelihood estimation with the following procedures.

1. An initial value $w_i^{(0)}$ of wi is set appropriately. For example, $w_i^{(0)} = 0$, and $\tau \leftarrow 0$.
2. As described below, $w_i^{(\tau+1)}$ is obtained. The symbol $\tau$ is the number of times of sequential calculation:

[Formula 18]

$$w_i^{(\tau+1)} = w_i^{(\tau)} - (\nabla \nabla E (w_i^{(\tau)}))^{-1} \nabla E (w_i^{(\tau)})$$

Note that $E(w_i^{(\tau)})$ is posterior probability, or a negative log of the likelihood. The symbol V is a differential operator vector. This is called an error function. In the case of the maximum A posterior probability estimation,

[Formula 19]

$$E (w_i^{(\tau)}) = -\log P (L_i | \Delta S_i, w_i^{(\tau)}) P (w_i^{(\tau)})$$

and in the case of the maximum likelihood estimation,

[Formula 20]

$$E (w_i^{(\tau)}) = -\log P (L_i | \Delta S_i, w_i^{(\tau)})$$

Moreover, $\nabla E(w_i^{(\tau)})$ and $\nabla \nabla E(w_i^{(\tau)})$ are a first-order differential column vector and a second-order differential line-column, respectively. For example, in the case of the maximum A posterior probability estimation, when Formulae 14, 16, and 17 are employed,

[Formula 21]

$$\nabla E (w_i^{(\tau)}) = \Sigma_0^{-1} w_i^{(\tau)} + \sum_{j=1}^{N} (\sigma (a_{j,i}^{(\tau)}) - L_{j,i}) x_j$$

[Formula 22]

$$\nabla \nabla E\ (w_i^{(\tau)})\ =\ \Sigma_0^{-1} + \sum_{j=1}^{N'} \sigma\ (a_{j,i}^{(\tau)})\ (1 - \sigma\ (a_{j,i}^{(\tau)}))\ x_j x_j^T$$

can be obtained, where

[Formula 23]

$$a_{j,i}^{(\tau)} = w_{i,1}^{(\tau)} \Delta S_{j,i} + w_{i,0}^{(\tau)}$$

[Formula 24]

$$x_j = (\Delta S_{j,i},\ 1)^T$$

3. when a difference between $w_i^{(\tau+1)}$ and $w_i^{(\tau)}$ is sufficiently small or when $\tau$ exceeds a fixed value, $w_i^{(\tau+1)}$ ends as $w_i^{MAP}$ or $w_i^{ML}$. Otherwise, as $\tau \leftarrow \tau+1$, the process returns to 2.

Next, a method of training the index vector size $Z_i$ will be described. To this end, the aforementioned operation is performed while the index vector size $Z_i$ is varied to various values (for example, values of 1 to M), and the $w_i^{MAP}$ or the $w_i^{ML}$ for which the error function is as small as possible and the $Z_i$ that achieves this may be provided as training results. This makes it possible obtain the best parameter in terms of accuracy.

Alternatively, the non-pivot-specific parameter may be trained so that a sum of the error functions for the non-pivot becomes as small as possible while the index size is equal to or smaller than a fixed value. To this end, the $w_i^{MAP}$ with which the sum of error functions for the non-pivot becomes largest while $Z_i$ of each non-pivot is varied to various values in a range where the index size is equal to or smaller than the fixed value and $Z_i$ that realizes this may be provided as training results ($M+1 \le i \le N$). This makes it possible to realize, when a required value is set for the size of the supplementary information, most excellent performance in terms of accuracy in a range that satisfies this.

Moreover, in this embodiment, obtaining the label $L_{ji}$ ($1 \le j \le NI$, $M+1 \le i \le N$) requires calculation of a total $(N-M) \times N'$ scores, which typically takes a great deal of time. Thus, a $\Delta$ score between each non-pivot and each piece of the ($N'$) training data may be obtained, ($<N'$) pieces of the training data may be selected in ascending order (where $v'$ is a value predefined by a system manager or the like), and they may be used for training. The piece of training data with a small $\Delta$ score is similar to the non-pivot with high possibility, and this makes it possible to reduce the number of times of score calculation required for the training to $(N-M) \times v'$ pieces while suppressing reduction in the number of labels $L_{ji}$ that take 1 (that is, that is similar to the non-pivot $X_i$) as much as possible. This consequently provides effect of performing high-speed training.

Moreover, for example, in a case where the pieces of enrolled data form several clusters in the feature space, the parameter such as the index vector size may take a similar or same value for each cluster.

Therefore, in this embodiment, clustering may be performed on the non-pivots, the non-pivot-specific parameter may be trained so that some or all of the parameters obtained for each cluster are common. As a clustering method, any of hierarchical methods such as a nearest neighbor method, a farthest neighbor method, a group average method, and a Ward method may be used. Training a common parameter for each cluster in this manner makes it possible to reduce a size of the parameter. This consequently provides effect of realizing further system weight reduction.

Moreover, in a case where the enrolled data is used as the training data, when enrolled data has been added, it is possible that the parameter training is not performed successfully since the index vector size of the training data is small. However, training the common parameter for each cluster as described above makes it possible to easily perform the parameter training by using the common parameter for the cluster to which the concerned enrolled data belongs.

[Second Embodiment]

Hereinafter, with reference to the accompanying drawings, the second embodiment will be described. A similarity search system of this embodiment is a biological body identification system which, as a result of inputting biological body information by a user who attempts authentication (hereinafter referred to as authenticated user), searches a database in a client terminal for similar biological body information, and thereby identifies to which user (hereinafter referred to as enrolled user) enrolled in the database the authenticated user corresponds, and performs authentication based on results of this identification.

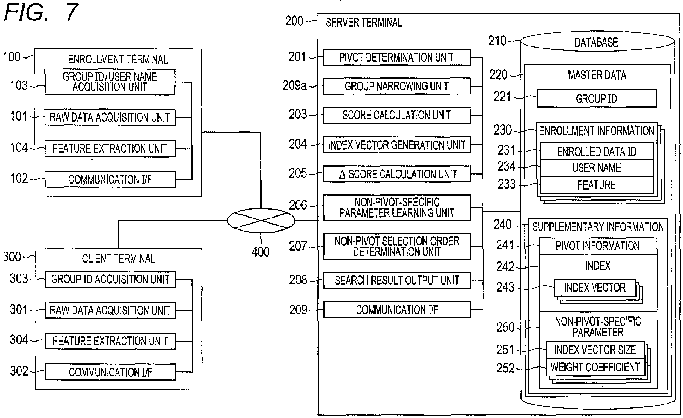

FIG. 7 shows a configuration example of the biological body identification system of this embodiment. Here, only a point different from FIG. 1 will be described. In this embodiment, raw data is biological body information.

This system is composed of: an enrollment terminal 100 that transmits to a server terminal a feature of biological body information obtained from the user; a server terminal 200 that saves enrollment information, generates supplementary information from the enrollment information, and performs biological body identification on a feature for authentication by using the enrollment information and the supplementary information; a client terminal 300 that transmits to the server terminal 200 a group ID and the feature for the authentication inputted by the user; and a network 400.

For example, it is possible to from, for an information access control system or an attendance management system of a firm, the enrollment terminal 100 with a plurality of PCs in the firm, the server terminal 200 with one server in a data center operated by the firm, the client terminal 300 with a plurality of employees' PCs, and the network 400 with the Internet. Moreover, it is possible to form, for an entrance and exit management system in the firm, the enrollment terminal 100, the server terminal 200, and the client terminal 300 in the same entrance and exit management device. A group ID 221 may be a value specific to a business place to which the user belongs, or may be set to be specific to each client terminal 300 or each base. In the former case, possible operation is to input the group ID at the time of authentication by the user. In the latter case, the user is not required to input the group ID at the time of authentication.

The enrollment terminal 100 further has: a group ID/user name acquisition unit 103 that acquires a group ID and a user name; and a feature extraction unit 104 that extracts a feature from raw data.

The server terminal 200 does not have a feature extraction unit 202 but has a group narrowing unit 209a and has master data 220 for each group ID. The master data 220 has a group ID 221. Enrollment information 230 does not have raw data 232 but has a user name 234 for each piece of the enrollment information.

Possible features of the biological body information are, for example, minutiae for fingerprints, an iris code for an iris, and cepstrum for a vocal print. Possible scores between the two pieces of biological body information are the number and a ratio of corresponding minutiae for the fingerprint, a Hamming distance for the iris, and a Mahalanobis distance for the vocal print.

The client terminal 300 further has: a group ID acquisition unit 303 that acquires a group ID; and a feature extraction unit 304 that extracts a feature from raw data.

Hardware configuration of the enrollment terminal 100, the server terminal 200, and the client terminal 300 according to this embodiment is the same as that of FIG. 2.

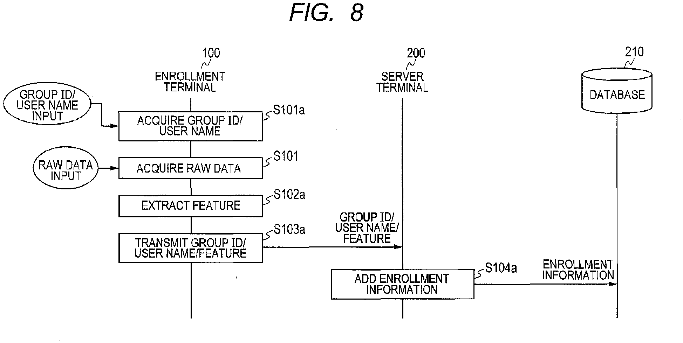

FIG. 8 shows processing procedures and a data flow of enrollment processing according to this embodiment. Step S101 of FIG. 8 is equal to step S101 of FIG. 3.

The enrollment terminal 100 acquires a group ID and a user name from the user (step S101a).

The enrollment terminal 100 extracts a feature for enrollment from raw enrolled data (step S102a).

The enrollment terminal 100 transmits to the server terminal 200 the group ID, the user name, and the feature for enrollment (Step S103a).

The server terminal 200, if the master data 220 corresponding to the group ID is in the database 210, adds to the master data 220 the enrollment information 230 including an enrolled data ID 231 specific to the enrolled data, the user name 234, and a feature 233 for enrollment. If there is no master data 220, the enrollment information 230 including the group ID 221, the enrolled data ID 231 specific to the enrolled data, the user name 234, and the feature 233 for enrollment is newly created (step S104a).

Processing procedures and a data flow of supplementary information generation processing according to this embodiment is the same as that of FIG. 4. Note that, however, this processing is performed for each group ID. The number N of pieces of the enrollment information 230 and the number M of pivots may be different from one group ID to another.

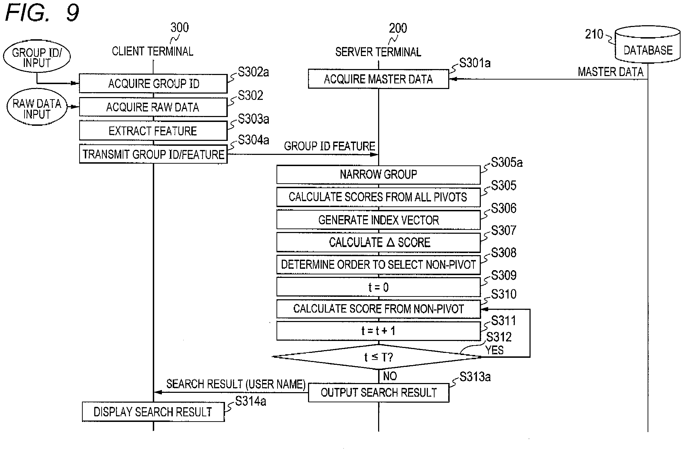

FIG. 9 shows processing procedures and a data flow of search processing according to this embodiment. Steps S302, S305 to S312, and S314 of FIG. 9 are equal to steps S302, S305 to S312, and S314 of FIG. 3.

The server terminal 200 acquires the master data 220 for each ID from the database 210 (step S301a).

The client terminal 300 acquires the group ID from the user (step S302a). The group ID may be a value specific to each client terminal 300 or each base, or may not be acquired from the user in this case.

The client terminal 300 extracts a feature for search from raw search data (step S303a).

The client terminal 300 transmits the group ID and the feature for search to the server terminal 200 (step S304a) .

A target of search by the server terminal 200 is master data corresponding to the acquired group ID (step S305a).

As described above, in this embodiment, narrowing the enrolled data by using the group ID is performed. This makes it possible to dramatically reduce the number of pieces of enrolled data for which the score is calculated. This consequently provides effect of further improving speed.

The server terminal 200 transmits, as a search result, the user name 234 corresponding to the enrolled data to the client terminal 300 (step S313a).

The client terminal 300 displays the user name 234 corresponding to the enrolled data as the search result (step S314a).

The present invention is applicable to any application that performs similarity search on unstructured data such as an image, a moving picture, music, a document, binary data, or biological body information. For example, the invention is applicable to a similar image search system, a similar moving picture search system, a similar music search system, a similar document search system, a similar file search system using fuzzy hash, an information access control system, an attendance management system, and an entrance and exit management system.

**Claims**

1. A similarity search system comprising:

   a pivot determination unit that determines a pivot from enrolled data;
   a raw data acquisition unit that acquires raw data;
   a feature extraction unit that extracts features from the raw data;
   a score calculation unit that calculates a score as one of a distance and a degree of similarity between the features;
   an index vector generation unit that generates an index vector by using the score for the pivot;
   a $\Delta$ score calculation unit that calculates a $\Delta$ score as one of a distance and a degree of similarity between the index vectors;
   a non-pivot-specific parameter training unit that trains, by using training data, a parameter of each non-pivot including a regression coefficient;
   a non-pivot selection order determination unit that determines, by using the $\Delta$ score between search data and the non-pivot as well as the regression coefficient, in order to select the non-pivots in descending order of posterior probability through logistic regression;
   a search result output unit that outputs a search result based on the score between the search data and the enrolled data; and
   a database that holds the feature of the enrolled data, pivot information indicating which piece of the enrolled data is the pivot, an index including the index vector of each non-pivot, and the parameter of each non-pivot.

2. The similarity search system according to claim 1,
   wherein the non-pivot-specific parameter training unit trains the parameter of each non-pivot including an index vector size.

3. The similarity search system according to claim 2,
   wherein the non-pivot-specific parameter training unit trains the parameter of each non-pivot including the index vector size so as to provide the smallest possible error function.

4. The similarity search system according to claim 2,
   wherein the non-pivot-specific parameter training unit trains the parameter of each non-pivot including the index vector size so that a sum of error functions for the non pivot becomes as small as possible while a size of the index is equal to or smaller than a fixed value.

5. The similarity search system according to claim 1,
   wherein the non-pivot-specific parameter training unit trains the parameter of each non-pivot through maximum a posterior probability estimation.

6. The similarity search system according to claim 1,
   wherein the non-pivot-specific parameter training unit trains the parameter of each non-pivot through maximum likelihood estimation.

7. The similarity search system according to claim 1,

wherein the non-pivot-specific parameter training unit, for each non-pivot, calculates a $\Delta$ score from the training data and selects the training data to be used for training by using the $\Delta$ score.

8. The similarity search system according to claim 1,
wherein the non-pivot-specific parameter training unit uses the enrolled data as the training data.

9. The similarity search system according to claim 1,
wherein the non-pivot-specific parameter training unit uses, as the training data, data previously prepared separately from the enrolled data.

10. The similarity search system according to claim 1,
wherein the non-pivot-specific parameter training unit performs clustering on the non-pivots and trains the parameter of each non-pivot so that some or all of the parameters are common for each obtained cluster.

11. The similarity search system according to claim 1,
wherein the index vector generation unit generates a permutation vector as the index vector.

12. The similarity search system according to claim 1,
wherein the index vector generation unit generates a score vector as the index vector.

13. The similarity search system according to claim 1, having a group narrowing unit that narrows the enrolled data by using a group ID,
wherein the data base holds the group ID.

14. A high-precision similarity search method in a server terminal performing similarity search on raw data transmitted from a client terminal by an enrollment terminal, the high-precision similarity search method comprising the steps of:

generating enrolled data composed of features extracted from the raw data;
selecting a pivot from the enrolled data;
calculating a score defined as one of a distance and a degree of similarity between the features;
generating an index vector by using the score for the pivot;
calculating a $\Delta$ score defined as one of a distance and a degree of similarity between the index vectors;
training, by using prepared training data, a parameter including a regression coefficient of each non-pivot not selected as the pivot from the enrolled data;
determining, by using the $\Delta$ score between inputted search data and the non-pivot as well as the regression coefficient, in order to select the non-pivots in descending order of posterior probability through logistic regression;
outputting a search result based on the score between the search data and the enrolled data; and
holding in a database the features of the enrolled data, pivot information indicating which piece of the enrolled data is the pivot, an index including the index vector of each non-pivot, and a parameter of each non-pivot.

15. The high-precision similarity search method according to claim 14, further comprising the steps of:

In the determination of the selection order, by using the training data, training the parameter of each non-pivot including the regression coefficient, and by using the $\Delta$ score between the search data and the non-pivot as well as the regression coefficient, determining the order to select the non-pivots in the descending order of posterior probability through the logistic regression.

## FIG. 1

# FIG. 2

| CPU 500 | MEMORY 501 | HDD 502 |
| INPUT DEVICE 503 | OUTPUT DEVICE 504 | COMMUNICATION DEVICE 505 |

# FIG. 3

# FIG. 4

*FIG. 5*

300
CLIENT TERMINAL

200
SERVER TERMINAL

210
DATABASE

RAW DATA INPUT

ACQUIRE MASTER DATA ⌐S301

MASTER DATA

ACQUIRE RAW DATA ⌐S302

TRANSMIT RAW DATA ⌐S303

RAW DATA

EXTRACT FEATURE ⌐S304

CALCULATE SCORES FROM ALL PIVOTS ⌐S305

GENERATE INDEX VECTOR ⌐S306

CALCULATE $\Delta$ SCORE ⌐S307

DETERMINE ORDER TO SELECT NON-PIVOT ⌐S308

$t = 0$ ⌐S309

CALCULATE SCORE FROM NON-PIVOT ⌐S310

$t = t + 1$ ⌐S311

S312

$t \leq T?$   YES

NO

SEARCH RESULT (RAW DATA)

OUTPUT SEARCH RESULT ⌐S313

DISPLAY SEARCH RESULT ⌐S314

FIG. 6

**FEATURE SPACE**

○ : SEARCH DATA Q
◎ : ENROLLED DATA $X_1 ... X_M$ (PIVOT)
● : ENROLLED DATA $X_{M+1} ... X_N$ (NON-PIVOT)

(a1)

| $S_q$ | | $S_{M+1}$ | $S_{M+2}$ | $S_{M+3}$ | ... | $S_N$ |
|---|---|---|---|---|---|---|
| Q | | $X_{M+1}$ | $X_{M+2}$ | $X_{M+3}$ | ... | $X_N$ |
| 78 | $X_1$ | 70 | 76 | 1078 | ... | 1083 |
| 95 | $X_2$ | 28 | 93 | 1016 | ... | 1021 |
| 1062 | $X_3$ | 1053 | 1058 | 32 | ... | 34 |
| ⋮ | ⋮ | ⋮ | ⋮ | ⋮ | ... | ⋮ |
| 39 | $X_M$ | 43 | 38 | 1050 | ... | 1055 |

⇕ SCORE

↘ INDEX

(a2)

| $T_q$ | | $T_{M+1}$ | $T_{M+2}$ | $T_{M+3}$ | ... | $T_N$ |
|---|---|---|---|---|---|---|
| Q | | $X_{M+1}$ | $X_{M+2}$ | $X_{M+3}$ | ... | $X_N$ |
| $X_M$ | 1 | $X_2$ | $X_M$ | $X_3$ | ... | $X_3$ |
| $X_1$ | 2 | $X_M$ | $X_1$ | $X_5$ | ... | $X_5$ |
| $X_2$ | 3 | $X_1$ | $X_2$ | $X_4$ | ... | $X_4$ |
| ⋮ | ⋮ | ⋮ | ⋮ | ⋮ | ... | ⋮ |
| $X_3$ | M | $X_3$ | $X_3$ | $X_1$ | ... | $X_1$ |

⇕ SCORE

(b1)

| $S_q$ | | $S_{M+1}/T_{M+1}$ | $S_{M+2}/T_{M+2}$ | $S_{M+3}/T_{M+3}$ | ... | $S_N/T_N$ |
|---|---|---|---|---|---|---|
| Q | | $X_{M+1}$ | $X_{M+2}$ | $X_{M+3}$ | ... | $X_N$ |
| 78 | $X_1$ | 70 | 76 | ■ | ... | ■ |
| 95 | $X_2$ | 28 | ■ | ■ | ... | ■ |
| 1062 | $X_3$ | ■ | ■ | 32 | ... | 34 |
| ⋮ | ⋮ | ■ | ■ | ■ | ... | ■ |
| 39 | $X_M$ | 43 | 38 | ■ | ... | ■ |

⇕ SCORE

(b2)

| $T_q$ | | $T_{M+1}$ | $T_{M+2}$ | $T_{M+3}$ | ... | $T_N$ |
|---|---|---|---|---|---|---|
| Q | | $X_{M+1}$ | $X_{M+2}$ | $X_{M+3}$ | ... | $X_N$ |
| $X_M$ | 1 | $X_2$ | $X_M$ | $X_3$ | ... | $X_3$ |
| $X_1$ | 2 | $X_M$ | $X_1$ | ■ | ... | ■ |
| $X_2$ | 3 | ■ | $X_2$ | ■ | ... | ■ |
| ⋮ | ⋮ | ■ | ■ | ■ | ... | ■ |
| $X_3$ | M | ■ | ■ | ■ | ... | ■ |

⇕ SCORE

*FIG. 7*

200 — SERVER TERMINAL

100 — ENROLLMENT TERMINAL
103 — GROUP ID/USER NAME ACQUISITION UNIT
101 — RAW DATA ACQUISITION UNIT
104 — FEATURE EXTRACTION UNIT
102 — COMMUNICATION I/F

201 — PIVOT DETERMINATION UNIT
209a — GROUP NARROWING UNIT
203 — SCORE CALCULATION UNIT
204 — INDEX VECTOR GENERATION UNIT
205 — Δ SCORE CALCULATION UNIT
206 — NON-PIVOT-SPECIFIC PARAMETER LEARNING UNIT
207 — NON-PIVOT SELECTION ORDER DETERMINATION UNIT
208 — SEARCH RESULT OUTPUT UNIT
209 — COMMUNICATION I/F

400

300 — CLIENT TERMINAL
303 — GROUP ID ACQUISITION UNIT
301 — RAW DATA ACQUISITION UNIT
304 — FEATURE EXTRACTION UNIT
302 — COMMUNICATION I/F

210 — DATABASE

220 — MASTER DATA
221 — GROUP ID

230 — ENROLLMENT INFORMATION
231 — ENROLLED DATA ID
234 — USER NAME
233 — FEATURE

240 — SUPPLEMENTARY INFORMATION
241 — PIVOT INFORMATION
242 — INDEX
243 — INDEX VECTOR

250 — NON-PIVOT-SPECIFIC PARAMETER
251 — INDEX VECTOR SIZE
252 — WEIGHT COEFFICIENT

22

## FIG. 8

# FIG. 9

Europäisches
Patentamt

European
Patent Office

Office européen
des brevets

# EUROPEAN SEARCH REPORT

**Application Number**

EP 12 15 3718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | GONZALEZ E C ET AL: "Effective Proximity Retrieval by Ordering Permutations", IEEE TRANSACTIONS ON PATTERN ANALYSIS AND MACHINE INTELLIGENCE, IEEE SERVICE CENTER, LOS ALAMITOS, CA, US, vol. 30, no. 9, 1 September 2008 (2008-09-01), pages 1647-1658, XP011246527, ISSN: 0162-8828 * the whole document * ----- | 1-15 | INV. G06F17/30 G06K9/62 |
| A | PATELLA M ET AL: "Approximate similarity search: A multi-faceted problem", JOURNAL OF DISCRETE ALGORITHMS, ELSEVIER, AMSTERDAM, NL, vol. 7, no. 1, 1 March 2009 (2009-03-01), pages 36-48, XP025898363, ISSN: 1570-8667, DOI: 10.1016/J.JDA.2008.09.014 [retrieved on 2008-09-26] * the whole document * ----- | 1-15 | |
| A | KARINA FIGUEROA ET AL: "Speeding Up Permutation Based Indexing with Indexing", SIMILARITY SEARCH AND APPLICATIONS, 2009. SISAP '09. SECOND INTERNATIONAL WORKSHOP ON, IEEE, PISCATAWAY, NJ, USA, 29 August 2009 (2009-08-29), pages 107-114, XP031533860, ISBN: 978-0-7695-3765-8 * the whole document * ----- -/-- | 1-15 | **TECHNICAL FIELDS SEARCHED (IPC)** G06F G06K |

The present search report has been drawn up for all claims

| Place of search | Date of completion of the search | Examiner |
|---|---|---|
| Munich | 18 July 2012 | Hauck, Rainer |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

| | Europäisches<br>Patentamt<br>European<br>Patent Office<br>Office européen<br>des brevets | **EUROPEAN SEARCH REPORT** | Application Number<br>EP 12 15 3718 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X,P | Takao Murakami ET AL: "Versatile probability-based indexing for approximate similarity search",<br>Proceedings of the Fourth International Conference on SImilarity Search and Applications (SISAP '11),<br>30 June 2011 (2011-06-30), pages 51-58,<br>XP55032974,<br>NY, USA<br>DOI: 10.1145/1995412.1995423<br>ISBN: 978-1-45-030795-6<br>Retrieved from the Internet:<br>URL:http://delivery.acm.org/10.1145/200000 0/1995423/p51-murakami.pdf?ip=145.64.134.2 42&acc=ACTIVE SERVICE&CFID=127872392&CFTOKEN=19248629&_ acm__=1342525642_b28105ebc63a49b79c9a73325 d49aa70<br>[retrieved on 2012-07-17]<br>* the whole document *<br>----- | 1-15 | |
| | | | TECHNICAL FIELDS<br>SEARCHED (IPC) |

The present search report has been drawn up for all claims

| Place of search | Date of completion of the search | Examiner |
|---|---|---|
| Munich | 18 July 2012 | Hauck, Rainer |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. CHAVEZ ; K. FIGUEROA ; G. NAVARRO.** Effective Proximity Retrieval by Ordering Permutations. *IEEE Trans. on Pattern Analysis and Machine Intelligence,* 2008, vol. 30 (9), 1647-1658

- **E. CHAVEZ ; K. FIGUEROA ; G. NAVARRO.** Effective Proximity Retrieval by Ordering Permutations. *IEEE Trans. On Pattern Analysis and Machine Intelligence,* 2008, vol. 30 (9), 1647-1658